# EUROPEAN PATENT SPECIFICATION

(11) **EP 2 478 275 B1**
(45) Date of publication and mention of the grant of the patent: **10.06.2015**
(21) Application number: 09744488.9
(22) Date of filing: 17.09.2009
(51) Int. Cl.: F16K 5/06

(54) **SEAL SYSTEM FOR INDUSTRIAL VALVES, PARTICULARLY FOR BALL VALVES, AND VALVE COMPRISING SAID SYSTEM**
DICHTUNGSSYSTEM FÜR INDUSTRIEVENTILE, IM BESONDEREN FÜR KUGELVENTILE UND VENTIL MIT DIESEM SYSTEM
SYSTÈME D'ÉTANCHÉITÉ POUR SOUPAPES INDUSTRIELLES, EN PARTICULIER POUR ROBINETS SPHÉRIQUES, ET SOUPAPE COMPRENANT LEDIT SYSTÈME

(43) Date of publication of application: 25.07.2012
(73) Proprietor: Gasket International S.p.A., 24060 Cividino di Castelli, Calepio (IT)
(72) Inventor: GIRELLI, Giuseppe, 24067 Sarnico (IT)
(74) Representative: Lualdi, Lorenzo
(86) International application number: PCT/IT2009/000418
(87) International publication number: WO 2011/033536

(56) References cited:
- GB-A- 1 414 440
- GB-A- 2 105 010
- US-A- 3 508 738
- US-A- 4 163 544
- US-A- 5 267 722
- US-A- 5 419 532
- US-A1- 2001 035 514

## Description

### Field of the invention

The present invention concerns ball valves, as known for instance from document GB-A-1 414 440.

### State of the art

Safety valves, in particular ball valves, are complex systems comprising a plurality of components and generally operated by means of a mechanical actuator. In the case of ball valves, they basically comprise at least one main body, at least one seat and at least one ball. Between the seat and the ball of the valve at least one seal operates, suitable for guaranteeing the seal of the valve and at the same time permitting the relative movement between seat and ball to perform opening and closing of said valve.

Said known seals in the state of the art consist in general of rubber O-rings suitable for providing a hermetic closure between the seat and the ball. The use of a rubber seal offers numerous advantages, which make the solution preferable with respect to the use of other materials.

Said advantages are mainly connected with the good capacity of the rubber to ensure an excellent seal even in the case of the surface finish of the ball being imperfect or in any case having a certain surface roughness. The use of a rubber seal therefore provides an excellent seal, limiting production costs as it is not necessary to exaggerate tolerances, surface finish and ball shape accuracy.

At the same time, however, the use of the O-ring as a seal has some drawbacks, firstly the risk of the valve "seizing", i.e. in the event of high operating pressures the rubber O-ring deforms and the seat comes into contact with the ball. The metal-metal contact between seat and ball can cause definitive seizure of the valve or at least deformation of the ball surface, also permanently.

A further drawback affecting the valves consists in the fact that impurities and dirt in general present in the fluid can become lodged between seat and ball, reaching the seal, in the long term affecting operation and ultimately resulting in seizure of the valve.

A limit of the valves comprising an O-ring type rubber gasket as the seal is the fact that they are not reliable for high fluid pressure values, i.e. pressure values exceeding 100 bars.

To improve the seal of the valve also at higher fluid pressure values, solutions are known on the market in which the seal consists of a ring having a substantially trapezoidal cross section, more precisely a delta cross section, known as delta-ring. Although this solution represents an improvement in terms of resistance to high pressures, it has proved to be not completely satisfactory in countering the drawbacks cited.

Alongside these solutions in which rubber seal rings are used, valves are known in the field which employ elements made of thermoplastic material to provide the seat-ball seal. Examples of materials used are P.T.F.E (with various compounds), nylon, PEEK and similar thermoplastic polymers with high hardness.

These seals made of plastic material have the advantage, with respect to the O-rings or delta-rings made of rubber, of avoiding metal-metal contact between seat and ball even at high operating pressures as they are less easily deformable than rubber. On the other hand, a disadvantage connected with the use of thermoplastic materials for production of the seal of an industrial valve of the type in question derives from the need for very low working tolerances and/or misalignments in assembly of the valve components and a very low surface roughness of the ball, which must therefore be surface-finished by polishing, in order to guarantee a good seal.

The need to provide for said machining processes and control of the tolerances during production of the parts entails a considerable increase in production costs, making the valves provided with seals made of thermoplastic material much more costly, and with the risk of production defects affecting the seal efficiency of the valve.

It has therefore been shown that both the solutions known in the state of the art adopted to obtain the ball seat seal in ball valves are affected by drawbacks.

### Summary of the invention

The main aim of the present invention is therefore to provide a ball valve with a seal system for industrial valves which solves the problems described above not solved by the systems of known type.

In the context of this aim, the object of the present invention is to provide a ball valve with a seal system able to guarantee the seal also at high operating pressures, exceeding 100 bars, up to 400 bars and beyond while maintaining low production costs.

A further object of the present invention is to provide a ball valve with a seal system which is free from the problems deriving from the presence of impurities or dirt in general in the fluid which in the long term affects efficient operation of the valve and the ball seat seal.

A further object of the present invention is to provide a ball valve with a seal system suitable for high pressures while keeping the costs low for production of the system and the valve comprising said system.

Lastly, a further object of the present invention is to provide a ball valve with a seal system which guarantees, in terms of resistance to high pressures, a reduction in the torque values necessary for opening/closing the valve, with the consequent advantage of being able to use less powerful actuators, resulting in further operating and production economy.

This aim and these and further objects which will become clearer from the detailed description of the present invention provided here for illustrative non-limiting purposes are achieved by a ball valve as defined in claim 1.

Preferred embodiments are defined in the dependent claims.

### Brief description of the figures

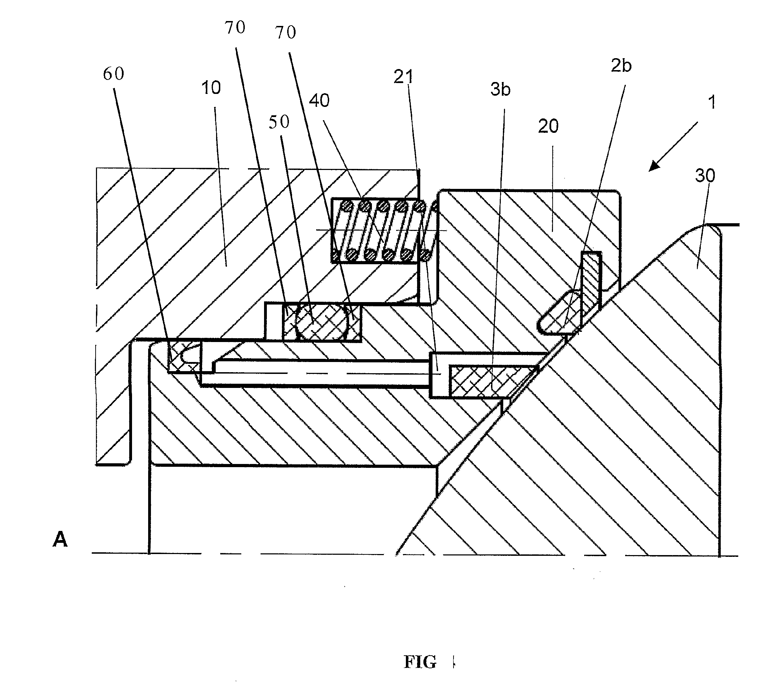

Further characteristics and advantages of the present invention will become clearer from the following detailed description, provided by way of non-limiting example and illustrated in the attached figure which shows a diagram of the system according to the present invention.

### Detailed description of the invention

The seal system comprises a seat 20 for the seal on a ball 30 and suitable for cooperating with a valve body 10. The seat 20 cooperates with the valve body 10 as known in the state of the art, therefore, for example, a helical spring 40, a seal O-ring 50, a U-shaped collar 60 and two "BKs" 70 can be advantageously provided between said seat 20 and said valve body 10.

Operation of the safety valves in question is known. The pressure exerted by the fluid which acts on the outer part of the seat 20 pushes the seat against the ball 30, while the pressure exerted on the inner part of the seat 20 pushes the seat away from the ball 30.

During operation of the seal system, the spring 40 which acts between seat and valve body ensures the seal at low pressure values, while as the pressure increases, it is the fluid itself that exerts the pressure action of the seat against the ball which ensures the valve seal.

According to the figure the seal of the seat on the ball is provided by a seal made of elastomeric material positioned in a housing appropriately provided on the face of the seat 20 which faces towards the ball 30, said seal coming into contact with said ball 30.

In accordance with the present invention shown in the figure , said seal made of elastomeric material consists of a ring 2b having triangular cross section, similar to the Greek capital letter delta and hence called delta-ring.

The seal system furthermore comprises a second element made of thermoplastic material 3b also positioned between said seat 20 and said ball 30. In particular, said thermoplastic element has the form of a ring with preferably trapezoidal section and is housed in a second seat appropriately provided again on the face of said seat which faces towards the ball (30).

According to the present invention said ring made of thermoplastic material, 3b, is advantageously positioned at the lubrication holes 21 provided in the seat 20.

Operation of the system according to the present invention is therefore as follows. In the configuration shown in which the element made of thermoplastic material 3 is positioned at the lubrication holes 21, it also performs the function of preventing any impurities and dirt in general present in the fluid under pressure from reaching the seal 2b made of elastomeric material, thus maintaining it intact and guaranteeing the efficient operation thereof.

Furthermore, when the fluid pressure increases, the presence of the ring made of thermoplastic material 3 prevents the seat 20 from locating against the ball 30 causing damage to the ball and possible seizure of the valve. The system according to the present invention therefore allows optimal seal of the valve to be obtained also with pressures in the order of 250 bars.

The thermoplastic element 3 therefore simultaneously provides the function of protecting the seal 2b from any impurities present in the fluid, prevents metal-metal contact deriving from seat-ball contact in the case of particularly high pressures, and at the same time contributes to the seal function performed by the element 2b made of elastomeric material. In this particular configuration the system according to the present invention has proved capable of operating with an optimal seal and with the required reliability also at fluid pressure values above 400 bars, more in particular around 420 bars, pressure values that cannot be reached by the valves known in the state of the art having seal made of elastomeric material.

It has thus been shown that the seal system for industrial valves according to the present invention achieves the object and purposes proposed.

In particular, it has been illustrated that the system subject of the present invention allows an optimal seal to be obtained also in the case of very high operating pressures, far superior to the standard values that can be obtained with valves provided with rubber seal ring.

A further object of the system according to the present invention is to improve the reliability of the valves provided with said system. In fact, it has been shown that the risk of damage to the ball or ultimately seizure of the valve is avoided also in the case of very high operating pressures.

A further object achieved by the system according to the present invention is that of eliminating or at least significantly reducing the phenomenon of sticking of the rubber seal on the ball in the event of long periods of non-movement of the valve, due to the fact that the system in question considerably reduces the stress between seat and ball under the thrust of the pressure.

Lastly, a further object achieved by the system according to the present invention is that of being able to use less powerful actuators for movement of the ball with respect to the valves of the type known in the state of the art and having the same utilisation pressure range.

A further object achieved by the system according to the present invention is that of providing a valve which can operate at the same pressures but is cheaper to produce.

Numerous modifications can be made by a person skilled in the art without departing from the protective scope of the present invention which is defined by the appended claims.

## Claims

1. Ball valve comprising a valve body (10), a ball (30) and a seal system (1), said seal system comprising a seat (20), lubrication holes (21) provided in said seat (20), a spring (40) inserted in the valve body (10) and acting between said seat (20) and the valve body (10), a seal (2b) made of elastomeric material positioned on the surface of said seat (20), designed to face towards said ball (30) and suitable for providing a fluid seal between said seat (20) and said ball (30), and at least one further element made of thermoplastic material (3) positioned on the surface of said seat (20) and designed to face towards said ball (30), said further element being housed in a housing seat provided in said seat, **characterised in that** said seal made of elastomeric material consists of a ring (2b) with triangular cross section, and **in that** said housing seat of said thermoplastic element (3) is positioned at the level of said lubrication holes (21) provided in the seat (20).

2. Ball valve as claimed in the preceding claim, **characterised in that** said element made of thermoplastic material is a ring (3).

3. Ball valve as claimed in the preceding claim, **characterised in that** said ring (3) has a polygonal cross section.

4. Ball valve as claimed in the preceding claim, **characterised in that** said ring (3) has a trapezoidal cross section.

5. Ball valve according to one or more of the preceding claims, **characterised in that** said element made of thermoplastic material (3) is made of polymeric material.

## Patentansprüche

1. Kugelventil mit einem Ventilkörper (10), einer Kugel (30) und einem Dichtungssystem (1), wobei das Dichtungssystem einen Sitz (20), Schmierlöcher (21), die in dem Sitz (20) vorgesehen sind, eine Feder (40), die in den Ventilkörper (10) eingesetzt ist und zwischen dem Sitz (20) und dem Ventilkörper (10) wirkt, eine Dichtung (2b), die aus elastomerem Material hergestellt ist, an der Oberfläche des Sitzes (20) angeordnet ist, derart entworfen ist, dass sie in Richtung der Kugel (30) weist, und geeignet ist, eine Fluiddichtung zwischen dem Sitz (20) und der Kugel (30) vorzusehen, und zumindest ein weiteres Element umfasst, das aus thermoplastischem Material (3) hergestellt ist, an der Oberfläche des Sitzes (20) angeordnet ist und derart entworfen ist, dass es in Richtung der Kugel (30) weist, wobei das weitere Element in einem Gehäusesitz untergebracht ist, der in dem Sitz vorgesehen ist, **dadurch gekennzeichnet, dass** die aus elastomerem Material hergestellte Dichtung aus einem Ring (2b) mit dreieckigem Querschnitt besteht, und dass der Gehäusesitz des thermoplastischen Elements (3) auf der Höhe der in dem Sitz (20) vorgesehenen Schmierlöcher (21) angeordnet ist.

2. Kugelventil nach dem vorhergehenden Anspruch, **dadurch gekennzeichnet, dass** das aus thermoplastischem Material hergestellte Element ein Ring (3) ist.

3. Kugelventil nach dem vorhergehenden Anspruch, **dadurch gekennzeichnet, dass** der Ring (3) einen polygonalen Querschnitt aufweist.

4. Kugelventil nach dem vorhergehenden Anspruch, **dadurch gekennzeichnet, dass** der Ring (3) einen trapezförmigen Querschnitt aufweist.

5. Kugelventil nach einem oder mehreren der vorhergehenden Ansprüche, **dadurch gekennzeichnet, dass** das aus thermoplastischem Material (3) hergestellte Element aus Polymermaterial hergestellt ist.

## Revendications

1. Soupape à bille comprenant un corps de soupape (10), une bille (30) et un système d'étanchéité (1), ledit système d'étanchéité comprenant un siège (20), des trous de lubrification (21) prévus dans ledit siège (20), un ressort (40) inséré dans le corps de soupape (10) et agissant entre ledit siège (20) et le corps de soupape (10), un joint d'étanchéité (2b) fait de matériau élastomère positionné sur la surface dudit siège (20), conçu pour être tourné vers ladite bille (30) et approprié pour fournir une étanchéité aux fluides entre ledit siège (20) et ladite bille (30), et au moins un élément supplémentaire fait de matériau thermoplastique (3) positionné sur la surface dudit siège (20) et conçu pour être tourné vers ladite bille (30), ledit élément supplémentaire étant logé dans un siège de logement prévu dans ledit siège, **caractérisé en ce que** ledit joint d'étanchéité fait de matériau élastomère est constitué d'un anneau (2b) avec section transversale triangulaire, et **en ce que** ledit siège de logement dudit élément thermoplastique (3) est positionné au niveau desdits trous de lubrification (21) prévus dans le siège (20).

2. Soupape à bille selon la revendication précédente, **caractérisé en ce que** ledit élément fait de matériau thermoplastique est un anneau (3).

3. Soupape à bille selon la revendication précédente, **caractérisé en ce que** ledit anneau (3) présente une section transversale polygonale.

4. Soupape à bille selon la revendication précédente, **caractérisé en ce que** ledit anneau (3) présente une section transversale trapézoïdale.

5. Soupape à bille selon une ou plusieurs des revendications précédentes, **caractérisé en ce que** ledit élément fait de matériau thermoplastique (3) est fait de matériau polymère.
